# EUROPEAN PATENT APPLICATION

(11) **EP 3 141 526 A1**
(43) Date of publication of application: **15.03.2017**
(21) Application number: 15002678.9
(22) Date of filing: 15.09.2015
(51) Int. Cl.: C01G 19/02, C01G 23/053, C01G 23/08, C09C 1/00

(54) **METHOD FOR PREPARATION OF TIO2-SNO2 NANOCOMPOSITES**

(30) Priority: 14.09.2015 PL 41396615
(71) Applicant: Akademia Gorniczo-Hutnicza im. Stanislawa Staszica w Krakowie, 30-059 Krakow (PL)
(72) Inventor: Marzec, Anna Maria, 25-530 Drozejowice (PL); Pedzich, Zbigniew, 30-619 Kraków (PL)
(74) Representative: Plotczyk, Leokadia

(57) **Abstract**

The object of the invention is a method for the preparation of TiO₂-SnO₂ nanocomposites which could be used to prepare composites with known and controlled chemical and phase composition and to control TiO₂ particle size in composites. The process for the preparation of TiC₂-SnO₂ nanocomposites is characterised in that titanium hydroxide gel obtained by the hydrolysis of titanium (IV) isopropoxide in a solution at pH 3-4 is dried at a temperature of 110-120°C for 16-20 hours and subsequently calcination is conducted at a temperature of 400-560^{c}C for 1.5-2.5 hours and the resulting powder is dispersed in an NH₄OH solution with pH 10-11, an aqueous SnCl₄ solution is added to the resulting solution and the reaction mixture is subjected to hydrothermal crystallisation in a three-stage temperature cycle with a temperature range of 160-180°C for 25-30 hours while stirring constantly.

## Description

The present invention concerns a method for the preparation of TiO₂-SnO₂ nanocomposites.

A number of synthetic methods for TiO₂-SnO₂ nanocomposites are known in the state of the art. In addition, two-stage methods for the manufacture of nanomaterials are known, such as that by S. Khoby Shendy, M. R. Vaezi, and T. Ebadzadeh (Synthesis of TiO2/SnO2 core shell nanocomposite via sol-gel method) published in International Journal of Modern Physics: Conference Series, World Scientific Publishing Company, 5, 251-256 (2012). According to the known method, TiO₂-SnO₂ nanocomposites are prepared by a two-stage method. In the first stage, nanocrystalline TiO₂ is synthesised using a sol-gel method combined with hydrothermal treatment of the resulting hydroxide gel. Ti[(OCH(CH₃)₂)]₄ is used as the precursor. The second stage of nanocomposite synthesis involves the incorporation of SnO₂ nanoparticles into the system. Therefore, the precursor (SnCl₄ · 5H₂O) is dissolved in distilled water and added dropwise to a colloid solution manufactured by dispersing TiO₂ in an NH₄OH solution. In this way, a white suspension is obtained, which is subsequently stirred, filtered, dried and calcined.

The known process enables the preparation of TiO₂-SnO₂ nanocomposites; however, it cannot be used to control the TiO₂ particle size and, as a result, to prepare nanocomposites containing TiO₂ with different particle sizes and phase composition (anatase/rutile).

The object of the invention is to develop a method for the preparation of TiO₂-SnO₂ nanocomposites which could be used to prepare composites from the TiO₂-SnO₂ system with known and controlled chemical and phase composition and to control TiO₂ particle size in the composites.

The object of the invention is a method for the preparation of TiO₂-SnO₂ nanocomposites which consists in that titanium hydroxide gel obtained by the hydrolysis of titanium (IV) isopropoxide in a solution at pH 3 - 4 is dried at a temperature of 110-120°C for 16-20 hours and subsequently calcination is conducted at a temperature of 400-560°C for 1.5-2.5 hours and the resulting powder is dispersed in an NH₄OH solution with pH 10-11, an aqueous SnCl₄ solution is added to the resulting solution and the reaction mixture is subjected to hydrothermal crystallisation in a three-stage temperature cycle with a temperature range of 160-180°C for 25-30 hours while stirring constantly. The inventors of the present invention have found that the process for the preparation of TiO₂-SnO₂ nanocomposites is preferably modified so that titanium hydroxide gel is obtained in the first stage, which is subsequently subjected to calcination. The size and the phase composition (anatase/rutile) of the resulting TiO₂ particles can be adjusted by selecting calcination temperature. Subsequently, in order to prepare the TiO₂-SnO₂ nanocomposite, SnO₂ is incorporated into the system using a hydrothermal process. Its precursor - SnCl₄ is dissolved in distilled water and added dropwise to a colloid solution manufactured by dispersing TiO₂ in an NH₄OH solution. In this way a white suspension is obtained which is subsequently stirred and subjected to hydrothermal treatment.

According to the present invention, nanocomposites are prepared using a two-stage modified sol-gel process. In the first stage of synthesis, nanocrystalline TiO₂ is obtained, which is subsequently used to manufacture the nanocomposite powder. The procedure for the preparation of TiO₂ is based on the hydrolysis of titanium (IV) isopropoxide (98%), which was previously diluted ten times in anhydrous isopropyl alcohol. Because the pH of the solution has an effect on the size of resulting crystallites and on the phase composition of TiO₂ (anatase/rutile), HCl (36%) and CH₃COOH (27%) are added to the alcohol in a volume ratio of 1:10, so as to adjust the system to pH 3-4, preferably 3. Subsequently, the mixture is stirred for 30 minutes at room temperature using a magnetic stirrer. The resulting solution is added dropwise to distilled water upon further vigorous stirring. The stirring is continued for 1 hour at room temperature. The volume ratio of Ti[(OCH(CH₃)₂)]₄ to H₂O in the resulting solution is 1:8. The resulting gel is dried in a laboratory dryer at a temperature of 110-120°C, preferably 115°C, for 16-18 hours, preferably 18 hours. The system is calcined in a muffle furnace in order to obtain a crystalline phase and remove any residual organic substances. The choice of the selected calcination temperature depends on the size of resulting TiO₂ particles, phase composition (anatase/rutile) and also on the degree of agglomeration. The calcination temperature should not be lower than 400°C, and calcination time is between 1.5-2.5 hours, preferably 2 hours. The resulting TiO₂ powder is ground in a mortar.

The second stage of the synthesis of nanocomposites involves the incorporation of SnO₂ particles into the system. Their precursor -SnCl₄ (99%) is diluted ten times in distilled water at room temperature and added dropwise to a colloid solution obtained by dispersing TiO₂ nanopowder in an aqueous NH₄OH solution with pH 10-11, preferably 10, using an ultrasonic disruptor, while stirring constantly using a magnetic stirrer. Concentration of the NH₄OH solution should be selected in such a way to ensure that SnCl₄ reacts completely under conditions of an excess of precipitating agent. Its pH must be 10-11, because the synthesis conducted under such pH conditions prevents agglomeration of TiO₂ and enables its maximum dispersion in solution. The volume of the NH₄OH solution used is selected so that the total volume of the system is 75% of the volume of a Teflon container that is placed in the reactor. Subsequently, the mixture is stirred for 60 minutes at room temperature. In this way, a white suspension is obtained which is subsequently subjected to hydrothermal treatment. The treatment takes place in a stainless steel reactor in which a Teflon container filled to 75% with the suspension in order to ensure appropriate vapour pressure is placed. The crystallisation process under hydrothermal conditions is carried out for 25 to 30 hours in a three-stage temperature cycle (example values: 195 min, 160°C; 60 min, 170°C; 1350 min, 180°C) while stirring constantly (100 rpm). After the hydrothermal crystallisation process is completed, the suspension is washed several times with distilled water to remove NH₄Cl. The washing is carried out by decanting. Subsequently, the precipitate is filtered using a sintered ceramic funnel. At the end it is dried to a constant mass in a laboratory dryer at 115°C. The dried powder is ground in a mortar. In this way, TiO₂-SnO₂ nanocomposites are prepared according to the invention.

This method for the synthesis of nanopowders according to the invention can be used to prepare composites from the TiO₂-SnO₂ system not only with known and controlled chemical and phase composition, but it also enables the control of the TiO₂ particle size in the composite and, therefore, preparation of materials with clearly varied sizes of TiO₂ and SnO₂ particles. In addition, unlike the processes used before, the method according to the invention allows more precise control of the mutual spatial arrangement of the ingredients of the composite, so its result is that TiO₂ grains are surrounded by SnO₂ grains rather than the two types of powders being randomly blended. Another very important feature of the powders prepared using the method according to the invention is the large development of their specific surface area and low particle agglomeration, an effect of the final hydrothermal treatment instead of calcination. The large specific surface area undoubtedly has a favourable effect on the application of the prepared nanopowders for the manufacture of, for example, resistance sensors for detecting gases.

TiO₂-SnO₂ nanocomposites are used in particular in resistance gas sensors. Owing to the application of such systems, sensor parameters, such as selectivity and sensitivity, can be improved and working temperatures reduced. For example, Calibration Technologies, Sensor & Control System, A & K Serwis, Sensor Tech and other companies use such nanocomposite powders in their technologies.

The invention is illustrated by the following embodiment which in no way limits the scope of the present invention.

### Example

The procedure for the preparation of TiO₂ involved each time gadding 20 cm³ of titanium (IV) isopropoxide (98%) dropwise to 200 cm³ of isopropyl alcohol, previously adjusted to pH 3 using HCl (36%) and CH₃COOH (27%) in a volume ratio of 1:10. Subsequently, the reaction was stirred at room temperature for 30 minutes. The resulting solutions were added dropwise to 160 cm³ of distilled water while stirring vigorously. The stirring was continued at room temperature for 1 hour. Subsequently, the gels were dried at a temperature of 115°C for 18 hours and calcined for 2 hours at 400°C, 450°C, 540°C and 560°C, respectively. The resulting TiO₂ powders were ground in a mortar. The results of XRD analysis of the obtained nanopowders are shown in Table 1.

**Table 1. Characteristics of TiO₂ nanopowders.**

| Sampla No. | Calcination temperature [°C] | Calcination time [h] | Masa fraction and phase composition (XRD) [%] | Average crystallite size (XRD) Dₕₖₗ [nm] |
|---|---|---|---|---|
| 1 | 400 | 2 | TiO₂ - anatase 100 | a TiO₂ - 3.0 ± 0.2 |
| 2 | 450 | 2 | TiO₂ - anatase 100 | a TiO₂ - 10.2 ± 0.2 |
| 3 | 540 | 2 | TiO₂ - anatase 100 | a TiO₂ - 33.8 ± 0*.*2 |
| 4 | 560 | 2 | TiO₂ - anatase 40.2 | a TiO₂ - 46.0 ± 0.2 |
| | | | TiO₂ - rutile 59.8 | r TiO₂ - 146.0 ± 0.2 |

Subsequently, in order to prepare TiO₂-SnO₂ composites containing 60% by mass of TiO₂ and 40% by mass of SnO₂ (Table 2) 1.57 cm³ of SnCl₄ (99%) was each tine diluted in 15.7 cm³ of distilled water at room temperature and added dropwise into colloid solutions prepared by dispersing 3 g of the TiO₂ powders obtained by calcination of hydroxide gels at a temperature of 400°C, 450°C,. 540°C and 560°C, respectively, in NH₄OH solutions of pH 10 while stirring constantly for 60 minutes at room temperature. Aqueous NH₄OH solutions were prepared by diluting 60 cm³ of NH₄OH (25%) in 160 cm³ of distilled water. Subsequently, the suspensions were transferred into Teflon containers and placed in the reactor. The crystallisation process under hydrothermal conditions was carried out in a three-stage temperature cycle (195 min, 160°C; 60 min, 170°C; 1350 min, 180°C) while stirring constantly (100 rpm). After the hydrothermal crystallisation process was completed, the suspensions were washed several times with distilled water, filtered and dried to constant mass in a laboratory dryer at 115°C. The dried powders were ground in a mortar. In this way, TiO₂-SnO₂ nanocomposites were obtained, characterised in Table 2.

**Table 2. Characteristics of TiO₂₋SnO₂ nanocomposites.**

| Sample No. | Mass fraction and phase composition (XRD) [%] | Average crystallite size (XRD) D_{Nel} [nm] | Specific surface area, S_{w} [m²/g] |
|---|---|---|---|
| 1 | TiO₂ - 56.2% anatase | a TiO₂ - 8.0 ± 0.2 | 126.35 ± 5.2 |
| | SnC₂ - 43.8% cassiterite | c SnO₂ - 3.6 ± 0.2 | |
| 2 | TiO₂ - 56.4% anatase | a TiO₂ - 10.4 ± 0.2 | 105.57 ± 5.2 |
| | SnO₂ - 43.6% cassiterite | c SnO₂ - 3.6 ± 0.2 | |
| 3 | TiO₂ - 55.9% anatase | a TiO₂ - 33.2 0.2 | 92.09 ± 5.2 |
| | SnO₂ - 44.1% cassiterite | c SnO₂ - 3.6 ± 0.2 | |
| 4 | TiO₂ - 23.7% anatase | a TiO₂ - 46.6 ± 0.2 | 67.50 ± 5.2 |
| | TiO₂ - 35.3% rutile | r TiO₂ - 146.2 0.2 | |
| | SnO₂ - 41.0% cassiterite | c SnO₂ - 3.6 ± 0.2 | |

## Claims

1. A process for the preparation of TiO₂-SnO₂ nanocomposites **characterised in that** titanium hydroxide gel obtained by the hydrolysis of titanium (IV) isopropoxide in a solution at pH 3-4 is dried at a temperature of 110-120°C for 16-20 hours and subsequently calcination is conducted at a temperature of 400-560°C for 1.5-2.5 hours and the resulting powder is dispersed in an NE₄OH solution with pH 10-11, an aqueous SnCl₄ solution is added to the resulting solution and the reaction mixture is subjected to hydrothermal crystallisation in a three-stage temperature cycle with a temperature range of 160-180°C for 25-30 hours while stirring constantly.
